# EUROPEAN PATENT SPECIFICATION

(11) **EP 3 234 506 B1**
(45) Date of publication and mention of the grant of the patent: **11.11.2020**
(21) Application number: 14908149.9
(22) Date of filing: 17.12.2014
(51) Int. Cl.: G01C 21/34, G01C 21/36, B60L 58/12, B60L 58/16

(54) **METHOD AND SYSTEM FOR DRIVING ASSISTANT AND VEHICLE HAVING THE SAME**
VERFAHREN UND SYSTEM FÜR EINEN FAHRASSISTENTEN UND FAHRZEUG DAMIT
PROCÉDÉ ET SYSTÈME D'ASSISTANCE À LA CONDUITE, ET VÉHICULE LE COMPRENANT

(43) Date of publication of application: 25.10.2017
(73) Proprietor: Volkswagen Aktiengesellschaft, 38440 Wolfsburg (DE)
(72) Inventor: LACHMUND, Uwe, 13053 Berlin (DE); DIETZ, Jan Peter, 24161 Altenholz (DE)
(86) International application number: PCT/CN2014/094025
(87) International publication number: WO 2016/095114

(56) References cited:
- CN-A- 102 009 625
- CN-A- 102 542 833
- CN-A- 102 622 907
- CN-U- 203 543 695
- US-A1- 2003 137 278
- US-A1- 2010 138 142
- US-A1- 2012 019 204
- US-A1- 2012 158 227
- US-A1- 2012 158 229
- US-A1- 2012 179 314
- US-A1- 2013 249 276

## Description

### FIELD OF THE INVENTION

The present invention relates to a driving assistant method and a driving assistant system as well as a vehicle having the same.

### BACKGROUND OF THE INVENTION

Driving assistance methods and driving assistance systems are known from the state of the art, in particular from the following publications: US 2012/158227 A1, US 2013/249276 A1. Both documents disclose driving assistant methods comprising the steps of releasing reserve capacity of an energy storage device, if it is recognised that a chargim; station can no longer be reached with the remaining capacity available.

For hybrid electric vehicles and electric vehicles, large-capacity traction storage batteries are usually utilized to supply energy to the vehicles. Since the energy capacity of the hybrid electric vehicles and the electric vehicles is limited, it is necessary to display information such as residual electric quantity, reachable driving range, neighboring charging stations/swapping stations and the like to users. Thus, a user may judge whether he needs to go to the neighboring charging station for loading/charging energy according to the information. However, if the user cannot timely discover that the neighboring charging station/swapping station cannot be reached by utilizing the residual energy, the user may only seek help from a road-side service when the energy is exhausted. Moreover, when the user makes a judgment according to the displayed information, the user may only take action to the vehicle by experience, and may not proactively make a feedback to the vehicle according to the prompt of the vehicle.

In addition, even if the user discovers that the energy is about to being exhausted and hurries to the neighboring charging station, he may not arrive at the neighboring charging station by utilizing the residual electric quantity under accidental conditions such as a traffic jam. Consequently, it can be seen that, although the vehicle may display numerous information to the user, it still cannot be ensured that the vehicle would arrive at a neighboring charging station/swapping station.

### SUMMARY OF THE INVENTION

The present disclosure specifically provides the solutions to eliminate the above existing problems. Thus, the present disclosure provides a driving assistant method and a driving assistant system and a vehicle having the same, through which the vehicle being stranded can be prevented as far as possible.

In one aspect, the present disclosure provides a driving assistant method for a vehicle (particularly an electric vehicle or a hybrid electric vehicle) according to claim 1, comprising a driving assistant system and an energy storage device, which comprises the following steps: providing a warning signal by the driving assistant system, if residual capacity of the energy storage device reaches a tolerance status which is determined by comparison between the residual capacity of the energy storage device and required energy capacity for supporting the vehicle to reach the next available at least one energy supply station, and releasing reserve capacity of the energy storage device according to the warning signal.

According to the idea of the disclosure, by providing the warning signal when the residual capacity of the energy storage device reaches a tolerance status, the user can timely discover that the neighboring charging station/swapping station cannot be reached by utilizing the residual energy, and then the user can take action to the vehicle according to his needs. That is to say, the user may proactively make a feedback to the vehicle according to the warning signal of the vehicle. In the context of the disclosure, the residual capacity of the energy storage device reaching a tolerance status means that the vehicle might not reach a next available energy supply station if action is not taken to the vehicle. Furthermore, when an accidental condition such as a traffic jam occurs, the vehicle may still have extra energy to reach the next available charging station/swapping station by releasing the reserve capacity of the energy storage device. Therefore, according to the solution of the disclosure, the risk for the vehicle to be stranded can be reduced or even eliminated.

In another aspect, the present disclosure relates to a driving assistant system for a vehicle (particularly an electric vehicle or a hybrid electric vehicle) according to claim 7, comprising an energy storage device, which comprises: an energy management system, which is configured to provide residual capacity of the energy storage device; and a drive control unit, which is configured to provide a warning signal if the residual capacity of the energy storage device reaches a tolerance status which is determined by comparison between the residual capacity of the energy storage device and required energy capacity for supporting the vehicle to reach the next available at least one energy supply station to the vehicle and to release reserve capacity of the energy storage device according to the warning signal.

In a further aspect, the present disclosure relates to a vehicle, particularly an electric vehicle or a hybrid electric vehicle, which comprises an energy storage device and an above-mentioned driving assistant system according to claim 14.

### BRIEF DESCRIPTION OF THE DRAWINGS

Embodiments of the invention will be explained in detail below with reference to the drawings, in which:
FIG. 1 shows a block diagram of a driving assistant system according to an embodiment of the present invention;
FIG. 2 shows a schematic diagram of a display and operating unit according to a preferred embodiment of the present invention;
FIG. 3A-Fig. 3D show process change diagrams of the display and operating unit according to the preferred embodiment of the present invention.

### DETAILED DESCRIPTION OF THE DRAWINGS

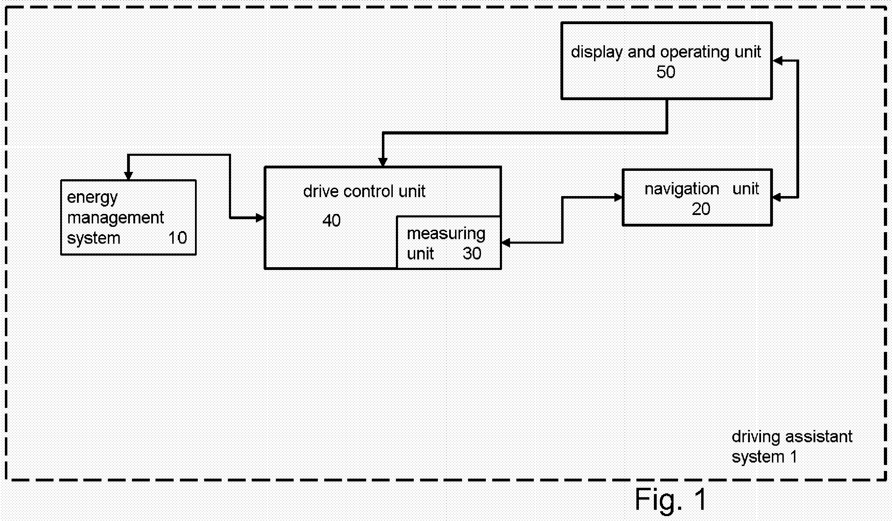

FIG. 1 shows a block diagram of a driving assistant system 1 for a vehicle, particularly an electric vehicle or a hybrid electric vehicle, according to an embodiment of the present invention. The vehicle includes an energy storage device (not shown in FIG.1) for storing the traction energy, for example, traction storage batteries for the electric vehicle.

The driving assistant system 1 as shown in FIG.1 includes an energy management system 10 for the energy storage device of the vehicle, which can monitor the energy loading or charging state of the energy storage device and the like, for example, it can monitor the electric quantity, temperature, voltage, current and ageing degree of the traction storage battery in the electric vehicle; a navigation unit 20, which can acquire the current position of the vehicle, traffic condition and geographic information and so on; a measuring unit 30, which can measure the ambient temperature outside the vehicle and the energy consumption of the vehicle; and a drive control unit 40, which can control the vehicle according to the information from the navigation unit 20, the measuring unit 30 and the energy management system 10. In this embodiment, the measuring unit 30 is integrated in the drive control unit 40. As an alternative solution, the measuring unit 30 may also be a separate component.

The driving assistant system 1 as shown in FIG.1 also includes a display and operating unit 50, which is connected to the drive control unit 40 and can be configured to display various information according to the needs of the user and to be operated by the user. As an alternative solution, the energy management system 10 may include a separate display and a separate operating device.

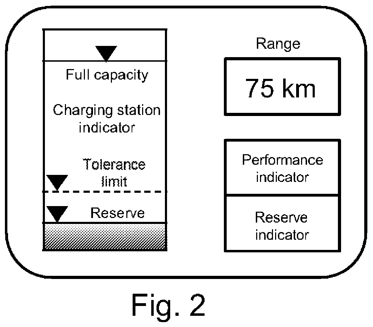

FIG. 2 shows a schematic diagram of the display and operating unit 50 according to a preferred embodiment of the present invention. The display and operating unit 50 may be configured to display, from up to down at the left side of Fig. 2, the residual capacity including the reserve capacity of the energy storage device, the charging station indicator, for example, the distance away from the next available charging station, e.g. the nearest energy supply station, the tolerance limit of the energy storage device, and the reserve capacity.

Herein, the information about the residual capacity of the energy storage device can be provided by the energy management system 10. The information about distance away from the next available charging station can be provided by the navigation unit 20.

The tolerance limit of the energy storage device represents required energy capacity for supporting the vehicle to reach the next available at least one energy supply station, for example to the nearest two energy supply stations, so that the vehicle can arrive at the nearest energy supply station even driving with high energy consumption mode or even there would be a traffic jam or the vehicle can arrive the nearest next energy supply even if the nearest energy supply station is missed. In a preferred embodiment, the required energy capacity can be determined according to related information including the distance to the next available at least one energy supply station, the actual vehicle energy consumption, traffic condition and geographic information. In this connection, the next available at least one energy supply station can be dynamically and continuously determined according to the current position of the vehicle by the navigation unit 20, the actual vehicle energy consumption can be provided by the measuring unit 30, and the traffic condition and the geographic information can be provided by the navigation unit 20.

For the reserve capacity of the residual capacity in the energy storage device, it can be released to support the vehicle to reach a neighboring charging station/swapping station, especially when an accidental condition such as a traffic jam occurs. The magnitude of the reserve capacity is set by the user as required, for example, the reserve capacity can be the electric quantity that can drive around 5 km.

In addition, the display and operating unit 50 may be configured to display, from up to down at the right side of Fig. 2, the reachable driving range of the vehicle (e.g. 75 km), a performance indicator and a reserve indicator, e.g. a reserve electric quantity release key. Herein, the reachable driving range of the vehicle can be determined by the drive control unit 40. The performance indicator can be operated by the user so as to automatically reduce the vehicle energy consumption, and the reserve electric quantity release key can be operated by the user so as to release the reserve capacity of the energy storage device.

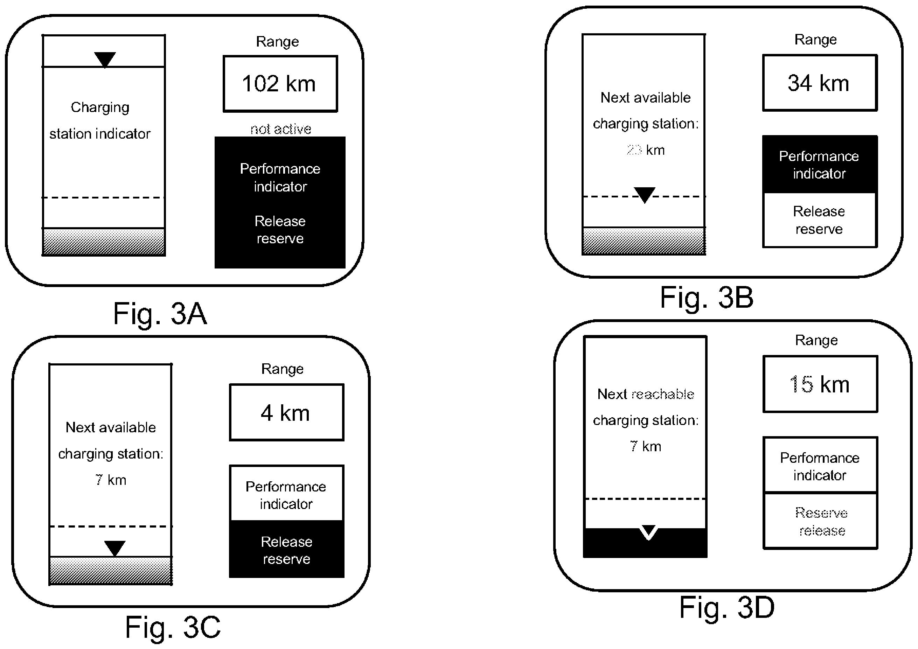

FIG. 3A-FIG. 3D show process changing diagrams of the display and operating unit 50 according to a preferred embodiment of the present invention. In FIG. 3A, the energy storage device is fully charged, the reachable driving range is 102 km at the moment, and the performance indicator and the reserve electric quantity release key have a specific color, e.g. blue, to show that the performance indicator and the reserve electric quantity release key are not activated. Herein, the tolerance limit, i.e. the required energy capacity, is determined in a manner as mentioned before and shown in the display and operating unit 50 as the dotted line. As shown in Fig. 3A, the residual capacity of the energy storage device is far more than the required energy capacity for supporting the vehicle to reach the next available charging station(s). In this case, the vehicle has sufficient energy to reach the next available charging station(s).

In FIG. 3B, the distance away from the next available charging station is 23 km at the moment, and the reachable driving range of the vehicle is 34 km. Moreover, the distance away from another next available charging station may be 28 km, which means that the residual capacity of the energy storage device is close to the tolerance limit of the energy storage device, so the residual capacity of the energy storage device reaches a tolerance status. In this embodiment, the tolerance status is a status that the residual capacity of the energy storage device is close to, for example, slightly larger or less than or approximately equal to, the required energy capacity. According to this embodiment, a warning signal can be provided by the driving assistant system 1, when the residual capacity of the energy storage device reaches the tolerance status which is determined by comparison between the residual capacity of the energy storage device and the required energy capacity for supporting the vehicle to reach the next available two energy supply stations. Therefore, more choices about the travel route would be provided for the user.

For example, the ratio of the residual capacity to the required energy capacity can be 1 to 1.2. When the residual capacity of the energy storage device reaches a tolerance status, a warning signal is provided by the driving assistant system 1, e.g. by the drive control unit 40.

In addition, as shown in Fig. 3B, the performance indicator has a specific color, e.g. orange, so that the energy consumption of the vehicle can be reduced based on instruction from the user of the vehicle. The user may manually reduce the energy consumption of the vehicle according to his needs. Thus, it may ensure that the user is aware of the warning, and the user autonomously selects whether the vehicle energy consumption is reduced or selects that the vehicle energy consumption is automatically reduced by the vehicle or manually reduced according to needs. In the context of the disclosure, reducing the energy consumption of the vehicle may include limiting the speed or acceleration of the vehicle, turning down the energy consumers (such as an air conditioner or an entertainment device, e.g. radio, multimedia device, ambient light etc.) in the vehicle and the like. In addition, the driving performance can be reduced automatically to ECO (economic) mode.

In FIG. 3C, the residual capacity of the energy storage device is less than the tolerance limit, the distance away from next available charging station is 7 km at the moment, and the reachable driving range of the residual capacity of the energy storage device is 4 km. Under such a condition, the ratio of the residual capacity to the required energy capacity is less than 1, and according to this comparison the vehicle energy consumption has to be reduced. Thus the vehicle energy consumption can be reduced automatically or according to instruction from the user. Then when the color of the reserve electric quantity key changes, (such as turns to red), the user may press the reserve electric quantity key to automatically release the reserve electric quantity. Alternatively, the reserve capacity of the energy storage device is released based on instruction from the user of the vehicle.

FIG. 3D shows a condition after the vehicle energy consumption is reduced (ECO mode) and the reserve electric quantity is released. At the moment, the distance away from the next available charging station is 7 km, and the reachable driving range of the vehicle is 15 km, and the reserve electric quantity key is unavailable.

In the embodiment of FIG. 3A-3D, the performance indicator and the reserve indicator are icons on the display and operating unit 50. As a alternative solution, the instruction of the user of the vehicle can be sent out by pressing a mechanical button/mechanical buttons on the vehicle.

Although the present invention has been described by way of examples and with reference to particular embodiments, it is to be understood that modification and/or improvements may be made without departing from the scope of the appended claims.

### LIST OF REFERENCE NUMERALS

- 10: energy management system
- 20: navigation unit
- 30: measuring unit
- 40: drive control unit
- 50: display and operating unit

## Claims

1. A driving assistant method for a vehicle comprising a driving assistant system and an energy storage device, being traction storage batteries, wherein the method comprises the following steps:
providing a warning signal by the driving assistant system, if residual capacity of the energy storage device reaches a tolerance status which is determined by comparison between the residual capacity of the energy storage device and required energy capacity for supporting the vehicle to reach the nearest at least one energy supply station, and
releasing reserve capacity of the energy storage device according to the warning signal,
wherein the reserve capacity of the energy storage device is released automatically or based on instruction from a user of the vehicle by the driving assistant system,
wherein the magnitude of the reserve capacity can be set by the user as required.

2. The driving assistant method according to claim 1, wherein the tolerance status is determined by comparison between the residual capacity of the energy storage device and required energy capacity for supporting the vehicle to reach the nearest two energy supply stations to the vehicle.

3. The driving assistant method according to claim 1 or 2, further comprising reducing energy consumption of the vehicle if the residual capacity of the energy storage device reaches the tolerance status which is a status that the residual capacity of the energy storage device is close to the required energy capacity.

4. The driving assistant method according to any one of the claims 1-3, wherein the energy consumption of the vehicle is reduced automatically or based on instruction from a user of the vehicle by the driving assistant system.

5. The driving assistant method according to any one of the claims 1-4, wherein the instruction is sent out by pressing a mechanical button on the vehicle or an icon on a display device of the vehicle.

6. The driving assistant method according to any one of the claims 1-5, further comprising dynamically and continuously determining the nearest at least one energy supply station according to the current position of the vehicle, and determining the required energy capacity according to information from the driving assistant system, which includes the distance to the nearest at least one energy supply station, the actual vehicle energy consumption, traffic condition and geographic information, and dynamically and continuously determining whether the residual capacity of the energy storage device reaches the tolerance status.

7. A driving assistant system for a vehicle comprising an energy storage device, being traction storage batteries, wherein the system comprises:
an energy management system (10), which is configured to provide residual capacity of the energy storage device; and
a drive control unit (40), which is configured to provide a warning signal if the residual capacity of the energy storage device reaches a tolerance status which is determined by comparison between the residual capacity of the energy storage device and required energy capacity for supporting the vehicle to reach the nearest at least one energy supply station and to release reserve capacity of the energy storage device according to the warning signal,
wherein the drive control unit (40) is further configured to release the reserve capacity of the energy storage device automatically or based on instruction from a user of the vehicle
wherein the magnitude of the reserve capacity can be set by the user as required.

8. The driving assistant system according to claim 7, wherein the tolerance status is determined by comparison between the residual capacity of the energy storage device and required energy capacity for supporting the vehicle to reach the nearest two energy supply stations to the vehicle.

9. The driving assistant system according to claim 7 or 8, wherein the drive control unit (40) is further configured to reducing energy consumption of the vehicle if the residual capacity of the energy storage device reaches the tolerance status which is a status that the residual capacity of the energy storage device is close to the required energy capacity.

10. The driving assistant system according to any one of the claims 7-9, wherein the drive control unit (40) is further configured to reduce the energy consumption of the vehicle automatically or based on instruction from a user of the vehicle.

11. The driving assistant system according to any one of the claims 7-10, wherein the driving assistant system further comprises a mechanical button, by pressing which the instruction is sent out, or the driving assistant system further comprises a display device with an icon thereon, by pressing which the instruction is sent out, wherein the display device with the icon forms a display and operating unit (50).

12. The driving assistant system according to any one of the claims 7-11, further comprising a navigation unit (20), which can provide current position of the vehicle, traffic condition and geographic information and is configured to dynamically and continuously determine the nearest at least one energy supply station according to the current position of the vehicle; and a measuring unit (30), which is configured to provide the energy consumption of the vehicle, and wherein the driving control unit (40) is further configured to determine the required energy according to related information including the distance to the nearest at least one energy supply station, the actual vehicle energy consumption, the traffic condition and the geographic information and to dynamically and continuously determine whether the residual capacity of the energy storage device reaches the tolerance status.

13. The driving assistant system according to claim 12, wherein the measuring unit (30) is integrated in the drive control unit (40).

14. A vehicle, particularly an electric vehicle or a hybrid electric vehicle, comprising an energy storage device being traction storage batteries and a driving assistant system according to any one of claims 7 to 13.

## Patentansprüche

1. Fahrassistenzverfahren für ein Fahrzeug, das ein Fahrassistenzsystem und eine Energiespeichervorrichtung umfasst, die Traktionsspeicherbatterien sind, wobei das Verfahren die folgenden Schritte umfasst:
Bereitstellen eines Warnsignals durch das Fahrassistenzsystem, wenn die Restkapazität der Energiespeichervorrichtung einen Toleranzstatus erreicht, der durch Vergleich zwischen der Restkapazität der Energiespeichervorrichtung und der erforderlichen Energiekapazität zur Unterstützung des Fahrzeugs bestimmt wird, um die dem Fahrzeug am nächsten liegende mindestens eine Energieversorgungsstationen zu erreichen.
Freigeben einer Reservekapazität der Energiespeichervorrichtung gemäß dem Warnsignal,
wobei die Reservekapazität der Energiespeichervorrichtung automatisch oder basierend auf Anweisung eines Benutzers des Fahrzeugs durch das Fahrassistenzsystem freigegeben wird,
wobei die Größe der Reservekapazität vom Benutzer nach Bedarf einstellbar ist.

2. Fahrassistenzverfahren nach Anspruch 1, wobei der Toleranzstatus durch Vergleich zwischen der Restkapazität der Energiespeichervorrichtung und der erforderlichen Energiekapazität zur Unterstützung des Fahrzeugs bestimmt wird, um die zwei dem Fahrzeug am nächsten liegenden Energieversorgungsstationen zu erreichen.

3. Fahrassistenzverfahren nach Anspruch 1 oder 2, ferner umfassend das Reduzieren des Energieverbrauchs des Fahrzeugs, wenn die Restkapazität der Energiespeichervorrichtung den Toleranzstatus erreicht, der ein Status ist, bei dem die Restkapazität der Energiespeichervorrichtung nahe an der erforderlichen Energiekapazität liegt.

4. Fahrassistenzverfahren nach einem der Ansprüche 1-3, wobei der Energieverbrauch des Fahrzeugs automatisch oder basierend auf Anweisung von einem Benutzer des Fahrzeugs durch das Fahrassistenzsystem reduziert wird.

5. Fahrassistenzverfahren nach einem der Ansprüche 1-4, wobei die Anweisung durch Drücken einer mechanischen Taste am Fahrzeug oder eines Symbols auf einer Anzeigevorrichtung des Fahrzeugs gesendet wird.

6. Fahrassistenzverfahren nach einem der Ansprüche 1-5, ferner umfassend dynamisches und kontinuierliches Bestimmen der nächsten mindestens einen Energieversorgungsstation gemäß der aktuellen Position des Fahrzeugs und Bestimmen der erforderlichen Energiekapazität gemäß den Informationen von dem Fahrassistenzsystem, die den Abstand zu der am nächsten liegenden mindestens einen Energieversorgungsstation, den tatsächlichen Fahrzeugenergieverbrauch, den Verkehrszustand und geographische Informationen einschließt, und dynamisches und kontinuierliches Bestimmen, ob die Restkapazität der Energiespeichervorrichtung den Toleranzstatus erreicht.

7. Fahrassistenzsystem für ein Fahrzeug, umfassend eine Energiespeichervorrichtung, die Traktionsspeicherbatterien ist, wobei das System umfasst:
ein Energieverwaltungssystem (10), das konfiguriert ist, um Restkapazität der Energiespeichervorrichtung bereitzustellen; und
eine Antriebssteuereinheit (40), die konfiguriert ist, um ein Warnsignal bereitzustellen, wenn die Restkapazität der Energiespeichervorrichtung einen Toleranzstatus erreicht, der durch Vergleich der Restkapazität der Energiespeichervorrichtung und erforderlicher Energiekapazität zur Unterstützung des Fahrzeugs bestimmt wird, um die am nächsten liegende mindestens eine Energieversorgungsstation zu erreichen und um die Reservekapazität der Energiespeichervorrichtung gemäß dem Warnsignal freizugeben,
wobei die Antriebssteuereinheit (40) ferner konfiguriert ist, die Reservekapazität der Energiespeichervorrichtung automatisch oder basierend auf Anweisung eines Benutzers des Fahrzeugs freizugeben,
wobei die Größe der Reservekapazität vom Benutzer nach Bedarf einstellbar ist.

8. Fahrassistenzsystem nach Anspruch 7, wobei der Toleranzstatus durch Vergleich zwischen der Restkapazität der Energiespeichervorrichtung und der erforderlichen Energiekapazität zur Unterstützung des Fahrzeugs bestimmt wird, um die zwei dem Fahrzeug am nächsten liegenden zwei Energieversorgungsstationen zu erreichen.

9. Fahrassistenzsystem nach Anspruch 7 oder 8, wobei die Antriebssteuereinheit (40) ferner konfiguriert ist, den Energieverbrauch des Fahrzeugs zu reduzieren, wenn die Restkapazität der Energiespeichervorrichtung den Toleranzstatus erreicht, der ein Status ist, bei dem die Restkapazität der Energiespeichervorrichtung nahe an der erforderlichen Energiekapazität ist.

10. Fahrassistenzsystem nach einem der Ansprüche 7-9, wobei die Antriebssteuereinheit (40) ferner konfiguriert ist, um den Energieverbrauch des Fahrzeugs automatisch oder basierend auf Anweisung von einem Benutzer des Fahrzeugs zu reduzieren.

11. Fahrassistenzsystem nach einem der Ansprüche 7-10, wobei das Fahrassistenzsystem ferner eine mechanische Taste umfasst, durch deren Drücken die Anweisung ausgesendet wird, oder das Fahrassistenzsystem ferner eine Anzeigevorrichtung mit einem Symbol darauf umfasst, durch dessen Drücken die Anweisung ausgesendet wird, wobei die Anzeigevorrichtung mit dem Symbol eine Anzeige- und Bedieneinheit (50) bildet.

12. Fahrassistenzsystem nach einem der Ansprüche 7-11, ferner umfassend eine Navigationseinheit (20), welche die aktuelle Position des Fahrzeugs, den Verkehrszustand und die geografischen Informationen bereitstellen kann und konfiguriert ist, um die am nächsten liegende mindestens eine Energieversorgungsstation gemäß der aktuellen Position des Fahrzeugs dynamisch und kontinuierlich zu bestimmen; und eine Messeinheit (30), die konfiguriert ist, um den Energieverbrauch des Fahrzeugs bereitzustellen, und
wobei die Antriebssteuereinheit (40) ferner konfiguriert ist, um die erforderliche Energie gemäß zugehörigen Informationen zu bestimmen, einschließlich des Abstands zu der am nächsten liegenden mindestens einen Energieversorgungsstation, des tatsächlichen Energieverbrauchs des Fahrzeugs, des Verkehrszustands und der geographischen Informationen, und um dynamisch und kontinuierlich zu bestimmen, ob die Restkapazität der Energiespeichervorrichtung den Toleranzstatus erreicht.

13. Fahrassistenzsystem nach Anspruch 12, wobei die Messeinheit (30) in die Antriebssteuereinheit (40) integriert ist.

14. Fahrzeug, insbesondere ein Elektrofahrzeug oder ein Hybrid-Elektrofahrzeug, umfassend eine Energiespeichervorrichtung, die Traktionsspeicherbatterien und ein Fahrassistenzsystem nach einem der Ansprüche 7-13 ist.

## Revendications

1. Procédé d'aide à la conduite pour un véhicule comprenant un système d'aide à la conduite et un dispositif de stockage d'énergie, étant des batteries de stockage de traction, dans lequel le procédé comprend les étapes suivantes :
la fourniture d'un signal d'avertissement par le système d'aide à la conduite, si une capacité résiduelle du dispositif de stockage d'énergie atteint un état de tolérance qui est déterminé par une comparaison entre la capacité résiduelle du dispositif de stockage d'énergie et la capacité énergétique requise pour permettre au véhicule d'atteindre l'au moins une station d'alimentation en énergie la plus proche, et
la libération de la capacité de réserve du dispositif de stockage d'énergie selon le signal d'avertissement,
dans lequel la capacité de réserve du dispositif de stockage d'énergie est libérée automatiquement ou sur la base d'une instruction provenant d'un utilisateur du véhicule par le système d'aide à la conduite,
dans lequel la grandeur de la capacité de réserve peut être définie par l'utilisateur selon le besoin.

2. Procédé d'aide à la conduite selon la revendication 1, dans lequel l'état de tolérance est déterminé par une comparaison entre la capacité résiduelle du dispositif de stockage d'énergie et la capacité énergétique requise pour permettre au véhicule d'atteindre les deux stations d'alimentation en énergie les plus proches du véhicule.

3. Procédé d'aide à la conduite selon la revendication 1 ou 2, comprenant en outre la réduction de la consommation énergétique du véhicule si la capacité résiduelle du dispositif de stockage d'énergie atteint l'état de tolérance qui est un état selon lequel la capacité résiduelle du dispositif de stockage d'énergie est proche de la capacité énergétique requise.

4. Procédé d'aide à la conduite selon l'une quelconque des revendications 1 à 3, dans lequel la consommation énergétique du véhicule est réduite automatiquement ou sur la base d'une instruction provenant d'un utilisateur du véhicule par le système d'aide à la conduite.

5. Procédé d'aide à la conduite selon l'une quelconque des revendications 1 à 4, dans lequel l'instruction est envoyée en appuyant sur un bouton mécanique sur le véhicule ou sur une icône sur un dispositif d'affichage du véhicule.

6. Procédé d'aide à la conduite selon l'une quelconque des revendications 1 à 5, comprenant en outre la détermination dynamique et continue de l'au moins une station d'alimentation en énergie la plus proche selon la position actuelle du véhicule, et la détermination de la capacité énergétique requise selon des informations provenant du système d'aide à la conduite, qui incluent la distance jusqu'à l'au moins une station d'alimentation en énergie la plus proche, la consommation énergétique réelle du véhicule, les conditions de circulation et des informations géographiques, et le fait de déterminer de façon dynamique et continue si la capacité résiduelle du dispositif de stockage d'énergie atteint l'état de tolérance.

7. Système d'aide à la conduite pour un véhicule comprenant un dispositif de stockage d'énergie, étant des batteries de stockage de traction, dans lequel le système comprend :
un système de gestion d'énergie (10), qui est configuré pour fournir une capacité résiduelle du dispositif de stockage d'énergie ; et
une unité de commande de conduite (40), qui est configurée pour fournir un signal d'avertissement si la capacité résiduelle du dispositif de stockage d'énergie atteint un état de tolérance qui est déterminé par une comparaison entre la capacité résiduelle du dispositif de stockage d'énergie et la capacité énergétique requise pour permettre au véhicule d'atteindre l'au moins une station d'alimentation en énergie la plus proche et pour libérer une capacité de réserve du dispositif de stockage d'énergie selon le signal d'avertissement,
dans lequel l'unité de commande de conduite (40) est en outre configurée pour libérer la capacité de réserve du dispositif de stockage d'énergie automatiquement ou sur la base d'une instruction provenant d'un utilisateur du véhicule,
dans lequel la grandeur de la capacité de réserve peut être définie par l'utilisateur selon le besoin.

8. Système d'aide à la conduite selon la revendication 7, dans lequel l'état de tolérance est déterminé par une comparaison entre la capacité résiduelle du dispositif de stockage d'énergie et la capacité énergétique requise pour permettre au véhicule d'atteindre les deux stations d'alimentation en énergie les plus proches du véhicule.

9. Système d'aide à la conduite selon la revendication 7 ou 8, dans lequel l'unité de commande de conduite (40) est en outre configurée pour réduire la consommation énergétique du véhicule si la capacité résiduelle du dispositif de stockage d'énergie atteint l'état de tolérance qui est un état selon lequel la capacité résiduelle du dispositif de stockage d'énergie est proche de la capacité énergétique requise.

10. Système d'aide à la conduite selon l'une quelconque des revendications 7 à 9, dans lequel l'unité de commande de conduite (40) est en outre configurée pour réduire la consommation énergétique du véhicule automatiquement ou sur la base d'une instruction provenant d'un utilisateur du véhicule.

11. Système d'aide à la conduite selon l'une quelconque des revendications 7 à 10, dans lequel le système d'aide à la conduite comprend en outre un bouton mécanique, par un appui sur lequel l'instruction est envoyée, ou le système d'aide à la conduite comprend en outre un dispositif d'affichage avec une icône sur celui-ci, par un appui sur lequel l'instruction est envoyée, dans lequel le dispositif d'affichage avec l'icône forme une unité d'affichage et d'exploitation (50).

12. Système d'aide à la conduite selon l'une quelconque des revendications 7 à 11, comprenant en outre une unité de navigation (20), qui peut fournir la position actuelle du véhicule, les conditions de circulation et des informations géographiques et est configurée pour déterminer de façon dynamique et continue l'au moins une station d'alimentation en énergie la plus proche selon la position actuelle du véhicule ; et une unité de mesure (30), qui est configurée pour fournir la consommation énergétique du véhicule, et
dans lequel l'unité de commande de conduite (40) est en outre configurée pour déterminer l'énergie requise selon des informations connexes incluant la distance jusqu'à l'au moins une station d'alimentation en énergie la plus proche, la consommation énergétique réelle du véhicule, les conditions de circulation et les informations géographiques et pour déterminer de façon dynamique et continue si la capacité résiduelle du dispositif de stockage d'énergie atteint l'état de tolérance.

13. Système d'aide à la conduite selon la revendication 12, dans lequel l'unité de mesure (30) est intégrée dans l'unité de commande de conduite (40).

14. Véhicule, en particulier un véhicule électrique ou un véhicule électrique hybride, comprenant un dispositif de stockage d'énergie étant des batteries de stockage de traction et un système d'aide à la conduite selon l'une quelconque des revendications 7 à 13.
